# EUROPÄISCHE PATENTANMELDUNG

(11) **EP 3 723 246 A1**
(43) Veröffentlichungstag der Anmeldung: **14.10.2020**
(21) Anmeldenummer: 20167285.4
(22) Anmeldetag: 31.03.2020
(51) Int. Cl.: H02K 5/20, H02K 11/33

(54) **TEMPERIERVORRICHTUNG FÜR EIN ELEKTROMODUL UND ELEKTROMODUL MIT EINER SOLCHEN TEMPERIERVORRICHTUNG**

(30) Priorität: 12.04.2019 DE 102019109751
(71) Anmelder: Witzenmann GmbH, 75175 Pforzheim (DE)
(72) Erfinder: Ehrenberger, David, 75203 Königsbach-Stein (DE)
(74) Vertreter: Lemcke, Brommer & Partner Patentanwälte Partnerschaft mbB

(57) **Zusammenfassung**

Vorgeschlagen wird eine Temperiervorrichtung (1) für ein Elektromodul, aufweisend: ein Hülsenelement (2) mit einem Innenraum (3) zum Aufnehmen eines Elektromoduls, welches Hülsenelement (2) eine umfänglich geschlossene Mantelfläche aufweist, welche Mantelfläche in wenigstens einem ersten Teilbereich gewellt oder anderweitig strukturiert ausgebildet ist, wobei Wellentäler (5a) oder andere Strukturen an einer Innenseite des Hülsenelements (2) einen Strömungsraum (3) zum Umströmen eines in dem Hülsenelement (2) aufgenommenen Elektromoduls mit einem Temperierfluid bilden, indem die Wellentäler (5a) oder Strukturen in diesem ersten Teilbereich an der Innenseite des Hülsenelements (2) mit wenigstens einer Zuleitung (6) für das Temperierfluid zu dem Innenraum (3) und mit einer Ableitung für das Temperierfluid aus dem Innenraum (3) in fluidleitender Verbindung stehen, welche Temperiervorrichtung (1) sich dadurch auszeichnet, dass zusätzlich zu den Hülsenelement (2) ein Aufnahmeelement (26) zum Aufnehmen einer Leistungselektronik (15) des Elektromoduls vorgesehen ist, welches Aufnahmeelement (26) wenigstens einem ersten Teilbereich seiner Oberfläche gewellt oder anderweitig strukturiert ausgebildet ist, wobei Wellentäler (29a) oder andere Strukturen an einer Innenseite des Aufnahmeelements (26) einen Strömungsraum (29b) zum Kühlen einer in dem Aufnahmeelement (26) aufgenommenen Leistungselektronik (15) mit einem Temperierfluid bilden, indem die Wellentäler (29b) oder Strukturen an der Innenseite des Aufnahmeelements (26) mit wenigstens einer Zuleitung für das Temperierfluid zu dem Strömungsraum (29b) und mit einer Ableitung (29c) für das Temperierfluid aus dem Strömungsraum (29b) in fluidleitender Verbindung stehen, wobei der Strömungsraum (29b) mit dem Innenraum (3) in fluidleitender Verbindung steht.

## Beschreibung

Die Erfindung betrifft eine Temperiervorrichtung für ein Elektromodul, aufweisend: ein Hülsenelement mit einem Innenraum zum Aufnehmen eines Elektromoduls, welches Hülsenelement eine umfänglich - bis auf Zuleitungen und Ableitungen - geschlossene Mantelfläche aufweist, welche Mantelfläche in wenigstens einem ersten Teilbereich gewellt oder anderweitig (oberflächlich) strukturiert ausgebildet ist, wobei Wellentäler oder andere Strukturen in diesem ersten Teilbereich an einer Innenseite des Hülsenelements einen Strömungsraum zum Umströmen eines in dem Hülsenelement aufgenommenen Elektromoduls mit einem Temperierfluid bilden, indem die Wellentäler an der Innenseite des Hülsenelements mit wenigstens einer Zuleitung für das Temperierfluid zu dem Innenraum und mit einer Ableitung für das Temperierfluid aus dem Innenraum in fluidleitender Verbindung stehen, nach dem Oberbegriff des Anspruch 1.

Außerdem betrifft die Erfindung ein Elektromodul mit einer Leistungselektronik zum Betreiben des Elektromoduls und mit einer erfindungsgemäßen Temperiervorrichtung, gemäß Anspruch 15.

Elektromodule, insbesondere Elektromotoren zu Antriebszwecken (Traktionsmotoren) weisen in aller Regel eine zum Betrieb des Elektromoduls erforderliche Elektronik auf, die vorliegend allgemein als "Leistungselektronik" bezeichnet wird. Diese kann z.B. Wechselrichter umfassen bzw. als Inverter ausgebildet sein und sich im Betrieb des Elektromoduls relativ stark erwärmen, sodass eine Temperierung bzw. Kühlung oder Entwärmung erforderlich ist. Bisher wurden z.B. bei Elektromotoren der Stator und der Inverter (Leistungselektronik, Wechselrichter) separat mit vorzugsweise seriell geschalteten Wärmeüberträgern entwärmt. Diese Ausführung erforderlich viel Bauraum und ist kostenintensiv. Darüber hinaus ist in einem solchen System mit einem erhöhten Druckverlust für das Temperierfluid zu rechnen, was die Entwärmung schwächt und zusätzliche konstruktive Maßnahmen erforderlich macht.

Aus der DE 10 2018 109 420 ist zur Vermeidung dieser Problematik bereits eine Temperiervorrichtung der genannten Art vorbekannt. Gemäß einer dort gezeigten Ausführungsform wird insbesondere vorgeschlagen, eine vorhandene Kühlhülse einerseits zum Kühlen eines Stators als auch andererseits zum Kühlen einer (Leistungs-)Elektronik zu verwenden. Hierdurch lässt sich der konstruktive Aufwand in vorteilhafter Weise reduzieren.

Der Erfindung liegt die Aufgabe zu Grunde, diesen Ansatz weiter zu verbessern, um eine weitere Reduktion von Bauteilen, Kosten und Bauraum zu erreichen.

Diese Aufgabe wird erfindungsgemäß gelöst durch eine Temperiervorrichtung mit den Merkmalen des Anspruchs 1.

Diese Aufgabe wird erfindungsgemäß auch gelöst durch ein Elektromodul mit den Merkmalen des Anspruch 15.

Vorteilhafte Weiterbildungen sind jeweils Gegenstand von entsprechenden Unteransprüchen.

Wenn nachfolgend von "Kühlen" die Rede ist, schließt das immer auch eine allgemeinere Temperierwirkung, d.h. Kühlen/Entwärmen und Heizen/Wärmen mit ein.

Eine erfindungsgemäße Temperiervorrichtung für ein Elektromodul, weist zumindest folgende Bestandteil auf: ein Hülsenelement mit einem Innenraum zum Aufnehmen eines Elektromoduls, welches Hülsenelement - abgesehen von etwaigen Zu- und Ableitungen - eine umfänglich geschlossene Mantelfläche aufweist, welche Mantelfläche in wenigstens einem ersten Teilbereich gewellt oder anderweitig (oberflächlich) strukturiert ausgebildet ist, wobei Wellentäler oder andere Strukturen in diesem ersten Teilbereich an einer Innenseite des Hülsenelements einen Strömungsraum zum Umströmen eines in dem Hülsenelement aufgenommenen Elektromoduls mit einem Temperierfluid bilden, indem die Wellentäler an der Innenseite des Hülsenelements mit wenigstens einer Zuleitung für das Temperierfluid zu dem Innenraum und mit einer Ableitung für das Temperierfluid aus dem Innenraum in fluidleitender Verbindung stehen.

Die erfindungsgemäße Temperiervorrichtung zeichnet sich dadurch aus, dass zusätzlich zu den Hülsenelement ein Aufnahmeelement zum Aufnehmen einer Leistungselektronik des Elektromoduls vorgesehen ist, welches Aufnahmeelement in wenigstens einem ersten Teilbereich seiner Oberfläche gewellt oder anderweitig (oberflächlich) strukturiert ausgebildet ist, wobei Wellentäler oder andere Strukturen an einer Innenseite des Aufnahmeelements einen Strömungsraum zum Kühlen einer in dem Aufnahmeelement aufgenommenen Leistungselektronik mit einem Temperierfluid bilden, indem die Wellentäler oder Strukturen an der Innenseite des Aufnahmeelements mit wenigstens einer Zuleitung für das Temperierfluid zu dem Strömungsraum und mit einer Ableitung für das Temperierfluid aus dem Strömungsraum in fluidleitender Verbindung stehen, wobei der Strömungsraum mit dem Innenraum in fluidleitender Verbindung steht.

Zusätzlich kann bei einer Weiterbildung der erfindungsgemäßen Temperiervorrichtung vorgesehen sein, dass das Hülsenelement in wenigstens einem zweiten Teilbereich einen ebenen Mantelflächenabschnitt aufweist, welcher Mantelflächenabschnitt zum wärmeleitenden Befestigen einer Leiterplatte für eine Leistungselektronik des Elektromoduls ausgebildet und bestimmt ist.

Gemäß dem Vorstehenden müssen die genannten Strömungsräume im Rahmen der Erfindung nicht zwangsläufig durch Wellen bzw. Wellentäler gebildet sein. Auch eine andere Art der Strukturierung, z.B. mit Strukturen in Form von Dellen, Dimples oder räumlich begrenzten Profilierungen, kommt in Betracht, solange sie die erforderliche Strömung des Temperierfluids ermöglicht oder begünstigt.

Der vorliegend verwendete Begriff "ebener Mantelflächenabschnitt" soll auch Ausgestaltungen umfassen, bei denen das Hülsenelement an sich in dem angesprochenen Bereich eine Wellung oder sonstige Strukturierung aufweist, also nicht glattwandig ausgebildet ist, bei denen diese Wellung oder sonstige Strukturierung jedoch mit wenigstens einem Wärmeleitelement, wie einem Wärmeleitrohr oder dgl., zumindest einseitig, bevorzugt außenseitig bezogen auf den Strömungsraum im Inneren des Hülsenelements, aufgefüllt ist, so dass sich in der Praxis der genannte ebene Mantelflächenabschnitt ergibt.

Dies entspricht faktisch einer weiteren Gestaltungsvariante des Anspruchs 1, wonach das Hülsenelement in wenigstens einem zweiten Teilbereich einen gewellten oder anderweitig strukturierten Mantelflächenabschnitt aufweist, welcher Mantelflächenabschnitt zum wärmeleitenden Befestigen einer Leiterplatte für eine Leistungselektronik des Elektromoduls ausgebildet und bestimmt ist, wobei bevorzugt zumindest außenseitig bezogen auf den Strömungsraum im Inneren des Hülsenelements die Wellung oder sonstige Strukturierung mit wenigstens einem Wärmeleitelement, wie einem Wärmeleitrohr oder dgl., aufgefüllt ist. Ein Wärmerohr ist ein Wärmeübertrager oder Wärmeüberträger, der unter Nutzung von Verdampfungswärme eines Mediums eine hohe Wärmestromdichte erlaubt. Auf diese Weise können große Wärmemengen auf kleiner Querschnittsfläche transportiert werden. Somit ergibt sich de facto der genannte ebene Mantelflächenabschnitt. Dabei kann das Wärmeleitelement stoffschlüssig, kraftschlüssig oder mittels eines wärmeleitenden Haftvermittlers mit dem Hülsenelement verbunden sein.

Mit anderen Worten: Die Gestaltungsvariante sieht insbesondere vor, dass der gewellte Bereich im Kontaktbereich von Hülsenelement und Leiterplatte erhalten bleibt und dass in die dort vorhandenen Wellentäler (oder anderen Strukturen) Wärmeleitrohre eingebracht werden. Die Wärmeleitrohre besitzen eine für den Wärmeübergang vorteilhaften Querschnitt und sind daher zur einfachen konduktiven Anbindung in einem unteren Bereich geometrisch der Welle und in einem oberen Bereich dem zu entwärmenden Körper (der Leiterplatte) angepasst. Hierbei können die Wellen oder anderen Strukturen im Kontaktbereich in ihrer radialen Ausdehnung vollständig erhalten bleiben oder reduziert werden. Die Wärmeverteilung erfolgt durch das/die Wärmerohr/e.

Es besteht auch die Möglichkeit, eine ebene, aus der Kühlhülse bzw. dem Hülsenelement ausgeformte Wärmeübertragungsfläche (der Mantelflächenabschnitt) mit den in die Wellen oder anderweitigen Strukturen eingelegten Wärmerohren für eine Flächenvergrößerung zu kombinieren. Die ausgeformte ebene Wärmeübertragungsfläche kann dabei durch Sicken/Wellen für die Wärmerohre unterbrochen sein. Ebenfalls möglich ist eine Variante, bei der in die Wellen einer durchgehend gewellten Kühlhülse Wärmerohre eingelegt (und dort insbesondere stoffschlüssig befestigt) werden, welche Wärmerohre sich tangential zu der Kühlhülse erstrecken können, um eine zu entwärmende Elektronik zu tragen bzw. abzustützen.

Auch möglich ist eine Variante, bei welcher die Wärmerohre außerhalb eines separaten Gehäuses für die Leistungselektronik angebracht und mit diesem (z.B. stoffschlüssig) verbunden sind. Seitlich des Gehäuses lassen sie sich durch Biegung wieder in den Wellen der Kühlhülse konduktiv anbinden. Hierbei können die Wärmerohre für eine größere Kontaktfläche der Kühlhülsenform über zumindest Teile des Umfangs folgen. Die Wärmerohre sind bevorzugt beidseitig stoffschlüssig angebunden, vorzugsweise durch Löten.

Möglich ist auch eine Kombination derartiger Varianten, bei welcher die Wärmeleitrohre im Inneren des Gehäuses für die Leistungselektronik beginnen und beidseitig durch eine abzudichtende Ausnehmung/Loch im Gehäuse nach außen geführt sind, um wieder an der Kühlhülse angebunden zu werden.

Bei einer Weiterbildung der erfindungsgemäßen Temperiervorrichtung kann weiterhin die Ableitung aus dem Strömungsraum des Aufnahmeelements mit der Zuleitung zu dem Innenraum des Hülsenelements in fluidleitender Verbindung stehen, oder umgekehrt. Mit anderen Worten: Das Hülsenelement (zum Temperieren des Elektromoduls) und das Aufnahmeelement (zum Temperieren der Leistungselektronik) können in einem gemeinsamen Kreislauf hintereinander geschaltet sein, wobei vorzugsweise das Ausnahmeelement in Strömungsrichtung des Temperierfluids vor dem Hülsenelement angeordnet ist.

Bei einem erfindungsgemäßem Elektromodul mit einer Leistungselektronik zum Betreiben des Elektromoduls und mit einer Temperiervorrichtung nach einem der diesbezüglichen Ansprüche ist demnach vorgesehen, dass die Leistungselektronik in dem von dem Hülsenelement separaten Aufnahmeelement angeordnet ist, wobei der gewellte Teilbereich der Oberfläche des Aufnahmeelements mit einer Leiterplatte für die Leistungselektronik des Elektromoduls in wärmeleitender Verbindung steht. Bei einer Weiterbildung kann vorgesehen sein, dass die Leistungselektronik an dem ebenen Mantelflächenabschnitt des Hülsenelements angeordnet ist.

Dabei kann für die Leistungselektronik ein separates Gehäuseteil vorgesehen sein, um einen Schutz vor äußeren Schadeinwirkungen zu schaffen. Ein solches Gehäusebauteil überdeckt bevorzugt zumindest den ebenen Mantelflächenabschnitt.

Das Gehäusebauteil kann außen an dem Hülsenelement befestigt sein vorzugsweise stoffschlüssig oder durch (lösbare) Verschraubung. Letztere ergibt eine besondere Wartungsfreundlichkeit.

Das Gehäusebauteil kann vorteilhafter Weise als Tiefziehteil, als Strangpressteil oder als Gussteil ausgebildet sein. Dies reduziert die Kosten und schafft vielfältige geometrische Gestaltungsmöglichkeiten.

Weiterhin kann das Hülsenelement einen ersten, gewellten oder anderweitig strukturierten Teilbereich aufweisen, in dem sich die Wellen oder die andere Struktur (siehe oben) im Wesentlichen in einer Umfangsrichtung des Hülsenelements erstrecken, und einen dritten, gewellten oder anderweitig strukturierten Teilbereich, in dem sich die Wellen oder die andere Struktur (siehe oben) ebenfalls im Wesentlichen in einer Umfangsrichtung des Hülsenelements erstrecken, wobei der zweite Teilbereich (mit dem ebenen Mantelflächenabschnitt) in Umfangsrichtung zwischen dem ersten Teilbereich und dem dritten Teilbereich angeordnet ist. Hierdurch wird eine gute Kühlwirkung erreicht.

Um die Strömungsverhältnisse zu optimieren und nachteilige Druckverluste zu vermeiden, kann zwischen der Zuleitung und dem ersten Teilbereich ein Verteilbereich angeordnet sein, der einen fluidleitenden Übergang zwischen der Zuleitung und den Wellentälern in dem ersten Teilbereich bildet.

Entsprechend kann zwischen dem dritten Teilbereich und der Ableitung ein Sammelbereich angeordnet sein, der einen fluidleitenden Übergang zwischen der Ableitung und den Wellentälern in dem dritten Teilbereich bildet.

Es kann weiterhin vorgesehen sein, dass der ebene Mantelflächenabschnitt im Querschnitt eine Tangente an die restliche Mantelfläche des Hülsenelements bildet. Ein solcher Abschnitt ist gut zugänglich und auch aus bauraumtechnischer Sicht vorteilhaft.

Es kann auch vorgesehen sein, dass in einem Übergangsbereich zwischen dem ersten, gewellten Teilbereich und dem ebenen Mantelflächenabschnitt an einer Innenseite des Hülsenelements wenigstens ein Strömungsbeeinflussungselement für das Temperierfluid vorgesehen ist. Durch ein solches Element lässt sich die Fluidströmung gezielt beeinflussen, insbesondere zum Erzeugen oder Vermeiden von Turbulenz, um die Temperierwirkung einzustellen. Derartige Strömungsbeeinflussungselemente können auch an anderer Stelle in einem Strömungsbereich des Temperierfluids zwischen dem Hülsenelement und einem darin aufgenommenen Elektromodul angeordnet sein.

Bei einer Weiterbildung kann das Hülsenelement nach Art eines geraden Kreiszylinders ausgebildet sein, wobei bevorzugt ein lichter Durchmesser im Bereich des ebenen Mantelflächenabschnitts kleiner ist als in dem restlichen Strömungsraum, d.h.im Bereich der Wellentäler. Ein solches Hülsenelement ist leicht und günstig herstellbar. Durch den genannten kleineren Durchmesser kann die Strömungsgeschwindigkeit des Temperierfluids in diesem Bereich erhöht werden, um dort die Kühlwirkung gezielt zu verbessern.

Bei einer anderen Weiterbildung kann wenigstens ein Deckelteil zum fluiddichten, stirnseitigen Verschließen des Hülsenelements vorgesehen sein. Dieses Deckelteil kann zur Funktionsintegration als Lagerschild, insbesondere für eine Antriebs-/Abtriebswelle eines als Elektromotor ausgebildeten Elektromoduls, ausgebildet sein.

Zur weiteren Bauteilreduktion kann bei einer Weiterbildung das Deckelteil einen Teil des Aufnahmeelements bilden.

Weiterhin kann vorgesehen sein, dass der gewellte, erste Teilabschnitt des Aufnahmeelements als von dem Deckelteil separates Bauteil ausgebildet und an dem Deckelteil befestigt ist. Dies hat sich fertigungstechnisch als vorteilhaft erwiesen, weil insbesondere zur Herstellung der genannten Teile unterschiedliche Materialien und/oder Fertigungsverfahren eingesetzt werden können.

Bei wieder einer anderen Weiterbildung kann das Aufnahmeelement mit dem Hülsenelement über eine flexible Leitungsverbindung für das Temperierfluid verbunden sein. So lassen sich leicht baumraumoptimierte Anordnungen realisieren.

Eine erste Weiterbildung des erfindungsgemäßen Elektromoduls sieht vor, dass zwischen der Leiterplatte und dem Mantelflächenabschnitt bzw. dem gewellten Teilbereich der Oberfläche des Aufnahmeelements ein vorzugsweise elektrisch isolierendes Wärmeübertragungsmedium, höchst vorzugsweise eine Wärmeleitpaste oder ein Wärmeleitpad, vorgesehen ist.

Eine erste Weiterbildung des erfindungsgemäßen Elektromoduls sieht vor, dass das Elektromodul ein Modulgehäuse aufweist, welches Modulgehäuse in dem Hülsenelement aufgenommen ist, wobei die Leistungselektronik außerhalb des Modulgehäuses und des Hülsenelements angeordnet ist. Das Modulgehäuse kann insbesondere als Statorträger für einen Elektromotor ausgebildet sein. Zwischen Modulgehäuse-Außenseite und dem Hülsenelement ist der genannte Innenraum für die Fluidströmung angeordnet. Bevorzugt kontaktiert das Hülsenelement die Modulgehäuse-Außenseite zumindest mit seinen Wellen im Bereich von deren (inneren) Scheiteln, um so von Welle zu Welle getrennte Strömungskanäle zu schaffen.

Eine zweite Weiterbildung des erfindungsgemäßen Elektromoduls sieht vor, dass das Modulgehäuse als Tiefzieh- oder Gussteil ausgebildet ist. Dies reduziert wiederum die Kosten und schafft vielfältige geometrische Gestaltungsmöglichkeiten.

Eine dritte Weiterbildung des erfindungsgemäßen Elektromoduls sieht vor, dass das oben erwähnte Gehäusebauteil an dem Modulgehäuse befestigt ist, vorzugsweise stoffschlüssig oder kraftschlüssig, höchst vorzugsweise angeschraubt. Auf diese Weise kann eine sichere und einfach auszubildende Befestigung erreicht werden.

Eine andere Weiterbildung des erfindungsgemäßen Elektromoduls sieht vor, dass es als Traktionsmotor für ein Elektrofahrzeug ausgebildet ist. Die vorliegende Erfindung hat sich hier besonders bewährt, weil sie in der Lage ist, die relativ starke Erwärmung der Leistungselektronik speziell in diesem Anwendungsfall zu kompensieren.

Eine wieder andere Weiterbildung des erfindungsgemäßen Elektromoduls sieht vor, dass die Leistungselektronik wenigstens einen Wechselrichter umfasst. Gerade solche Bauteile erwärmen sich im Betrieb stark und erfordern ausreichende Kühlung.

Eine noch andere Weiterbildung des erfindungsgemäßen Elektromoduls sieht vor, dass die Leistungselektronik auf einer Mehrzahl von Leiterplatten angeordnet ist, die vorzugsweise jeweils tangential zu dem Hülsenelement an diesem angeordnet sind, höchst vorzugsweise an einer entsprechenden Mehrzahl an ebenen Mantelflächenabschnitten. So lassen sich auch größere Elektronikanordnungen mit entsprechend großen Leiterplatten effizient kühlen.

Im Folgenden wird zur weiteren Beschreibung von bevorzugten Ausgestaltungen der Erfindung hinsichtlich der Wortwahl speziell auf das Beispiel eines als Elektromotor mit Stator und Rotor ausgebildeten Elektromoduls mit entsprechender Leistungselektronik (Inverter) abgestellt, ohne dass die Erfindung jedoch grundsätzlich hierauf beschränkt wäre.

Um die Elektronik-/lnverterkühlung in die Kühlung des Elektromoduls (z.B.in Form einer Statorkühlung mit Kühlhülse) zu integrieren, wird im Zuge einer Weiterbildung der Erfindung u.a. vorgeschlagen, die Kühlhülse (das Hülsenelement) aus DE 10 2018 109 420 derart weiterzubilden, dass eine Ebene, vorzugsweise eine tangentiale Außenfläche an der Kühlhülse entsteht, welche zur Wärmeübertragung in negativer Radiusrichtung der Kühlhülse genutzt werden kann. Auf diese Fläche kann der Inverter (die Leistungselektronik) wärmeleitend aufgebracht sein. Dabei kann vorgesehen sein, dass sich die Kühlkanäle (die Wellentäler an einer Innenseite des Hülsenelements) in Umfangsrichtung des Hülsenelements beiderseits in einem an den ebenen Mantelflächenabschnitt angrenzenden Bereich "auflösen" bzw. zum einen gemeinsamen, abgeflachten Strömungsraum vereinigen, um die Geometrie einfach in einem bevorzugten Innenhochdruckumformverfahren herstellen zu können.

Die (Leistungs-)Elektronik selbst kann dabei zumindest zur Umgebung hin von einem Gehäuse (auch: Invertergehäuse) abdeckt sein. Des Weiteren kann die Inverterelektronik durch einen optional versickten Deckel des Gehäuses montiert, gewartet und getauscht werden.

Das Invertergehäuse ist dafür vorzugsweise mittels eines Tiefzieh-Verfahrens und auf einer der Kühlhülse zugewandten Seite geöffnet, um einen besseren Wärmeübergang darstellen zu können. Eine Variante des Gehäuses sieht vor, das Gehäuse zusätzlich zu versicken, um das Schwingungsverhalten speziell bei Fahrzeuganwendungen (sog. NVH-Verhalten) positiv zu beeinflussen. Die vorzugsweise im Gehäuse angeordnete Leiterplatte oder Leiterplatine mit den zu kühlenden Elektronik-Komponenten kann mit einer Wärmeleitpaste konduktiv (wärmeleitend) an die Kühlhülse angeschlossen und beispielsweise über an dieser vorgesehene Gewindebuchsen verschraubt sein. Die Gewindebuchen können z.B. durch Widerstandspunktschweißen an der Kühlhülse befestigt sein.

Alternativ kann anstelle oder zusätzlich zu der Wärmeleitpaste auch ein Wärmeleitpad oder ein Hitzeverteiler (Vaporchamber bzw. Wärmeleitrohr(e)) zum Einsatz kommen. Dies ist insbesondere dann der Fall, wenn die Elektronikoberfläche gleichmäßig entwärmt werden muss.

In der Kühlhülse strömt ein Temperierfluid an der Hülsen-Innenseite zwischen Kühlhülse und einer Außenseite eines aufgenommenen Elektromoduls. Die Kühlhülse weist vorzugsweise im Bereich der tangentialen Außenfläche (des ebenen Mantelflächenabschnitts) bzw. eines dort angeordneten Fluidspalts einen gegenüber dem gewellten Bereich geringeren Strömungsraum-Querschnitt auf, um die Strömungsgeschwindigkeit hier gezielt zu erhöhen und die an dieser Stelle beidseitig, d.h. vom Elektromodul und von der (Leistungs-)Elektronik stammende Wärme effizient abzuführen. Für einen optimierten Wärmeübergangskoeffizienten ins Fluid können in diesem Bereich auch Wärmeleitbleche und/oder Turbulenzgeneratoren in die Strömung eingebracht werden. Die Wärmeabfuhr kann durch die beschriebenen Maßnahmen in vorteilhafter Weise über die Kontaktfläche (den ebenen Mantelflächenabschnitt) homogenisiert werden.

Betreffend das Elektromodul kann dessen Außenseite durch die Außenseite eines Statorträgers gebildet sein, der wiederum vorzugsweise als Strangpressprofil ausgebildet ist, was kostengünstig sein kann. Dabei kann, wie die Kühlhülse, auch das Strangpressprofil des Statorträgers außen ein unrundes Profil aufweisen, das den Fluidspalt über die Länge des ebenen Mantelflächenabschnittes konstant hält. Es werden dadurch Wirbel vermieden.

Zur Abdichtung und Versteifung kann das (Inverter-)Gehäuse stoffschlüssig an die Kühlhülse angebunden sein. Hierbei bietet sich als Herstellverfahren insbesondere das Löten neben dem Schweißen und Kleben an.

Weiterhin kann vorgesehen sein, dass stirnseitige angeordnete, deckelartige sogenannte Lagerschilde den ebenfalls hülsenförmig ausgebildeten Statorträger, der vorzugsweise als Strangpressprofil ausgeführt ist, und die Kühlhülse gemeinsam aufnehmen, sodass alle vorstehend genannten Bauteile in einem einzigen (Schweiß-)Prozessschritt gefügt und gegeneinander abgedichtet werden können. Alternativ ist auch hier ein Kleben oder Löten möglich.

Das (Inverter-)Gehäuse sitzt vorzugsweise tangential auf der Kühlhülse und stützt sich an den Lagerschilden zur Versteifung der dünnwandigen Blechkonstruktion der Kühlhülse ab. Die Lagerschilde können als Guss-, Schmiede- oder Blechumformteile ausgestaltet sein.

Die elektrische Kontaktierung des Stators und des Inverters kann durch einen Durchbruch eines geteilt ausgebildeten Lagerschilds ermöglicht sein. Eine solche Teilung des Lagerschilds begünstigt die Montage von Stator und Rotor und bietet bei einer lösbaren Verbindung auch eine Reparaturmöglichkeit. Ein ggf. noch anzubringendes (anzuflanschendes) Getriebe (Untersetzung/Differential) kann an das Lagerschild angeflanscht werden.

Die Temperiervorrichtung bzw. das Elektromodul, insbesondere mit integrierter Stator- und Inverterkühlung, ist in verschiedenen Werkstoffgruppen herstellbar, vorzugsweise in den Gruppen Aluminium für eine erhöhte Wärmeleitfähigkeit und Stahl für eine erhöhte Steifigkeit sowie aufgrund der guten Umformbarkeit von austenitischen Stählen.

Wird mehr Bauraum für die (Leistungs-)Elektronik benötigt, so kann die Elektronik auf mehrere Leiterplatten aufgeteilt werden, die vorzugsweise über den Umfang verteilt tangential an der Kühlhülse angeordnet sind, worauf bereits hingewiesen wurde. Diese kann zu diesem Zweck mehrere ebene Mantelflächenabschnitte aufweisen.

Das (Inverter-)Gehäuse kann in einer weiteren Ausführung als Gussbauteil ausgebildet werden. Diese Ausführung bringt den Vorteil mit sich, dass beim Guss weitere Funktionen, wie beispielsweise Anschraubpunkte für einen Deckel oder die Leiterplatte(n), ausgebildet werden können.

Die alternative Ausführung sieht vor, die Leitungselektronik in einem separaten Aufnahmeelement, das zumindest zum Teil als Strangpressprofil ausgeführt sein kann, unterzubringen. Das (Inverter-)Gehäuse wird dann bevorzugt durch eine stoffschlüssig angebundene Kühlplatte entwärmt, in deren Bereich das Aufnahmeelement gewellt ausgebildet ist, wobei Wellentäler an einer Innenseite des Aufnahmeelements einen Strömungsraum zum Kühlen einer in dem Aufnahmeelement aufgenommenen Leistungselektronik mit einem Temperierfluid bilden, wie bereits ausgeführt.

Hierbei kann eine andere Weiterbildung vorsehen, dass beide Strangpressprofile, nämlich dasjenige des Statorträgers und dasjenige des Gehäuses, in einen geteilt ausgebildeten (A-seitigen) Lagerschild eingeschweißt/eingeschraubt werden.

Um bei einer solchen Ausgestaltung die Kühlhülse des Stators und die Kühlplatte des Inverters (das Aufnahmeelement) zu einem einen seriellen Kühlkreislauf zu verbinden, wird als Weiterbildung vorgeschlagen, die Kühlhülsenanschlüsse (Zuleitung und Ableitung) gegenüber einer Lage der Kühlplatte zu verdrehen, um beide Wärmeübertrager (Kühlhülse und Aufnahmeelement) bevorzugt mit einem Elastomerschlauch zu verbinden. Vorteilhafter Weise verbindet der Schlauch eine Ableitung für das Temperierfluid aus dem Strömungsraum (des Aufnahmeelements) mit einer Zuleitung für das Temperierfluid in den Innenraum (der Kühlhülse bzw. des Hülsenelements).

Insgesamt hat sich herausgestellt, dass im Rahmen der Erfindung gegenüber dem Stand der Technik weniger Bauteile benötigt werden, die über umformende Verfahren kostengünstig hergestellt werden können. Durch die geringeren Wärmewege ist eine bessere Wärmeabfuhr zu erwarten. Durch die realisierbaren kleineren Wandstärken ist zudem ein Leichtbaupotential zu erwarten.

Eine besonders vorteilhafte Weiterbildung des erfindungsgemäßen Elektromoduls sieht dabei vor, dass eine elektrische Verbindung zwischen der Leistungselektronik und einem in dem Modulgehäuse aufgenommenen Bestandteil, insbesondere dem Stator eines Elektromotors, über einen Durchbruch realisiert ist, welcher Durchbruch unmittelbar zwischen einem die Leistungselektronik aufnehmendem Gehäuse und dem Modulgehäuse oder einem das Modulgehäuse nach außen verschließenden Lagerschild angeordnet ist.

Weitere Eigenschaften, Merkmale und Vorteile ergeben sich aus der nachfolgenden Beschreibung von Ausführungsbeispielen anhand der Zeichnung.
- Figur 1: zeigt eine erfindungsgemäße Temperiervorrichtung in perspektivischer Ansicht;
- Figur 2: zeigt eine mögliche Anschlussgestaltung im Bereich der Zuleitung oder Ableitung bei der Temperiervorrichtung gemäß Figur 1;
- Figur 3: zeigt einen Querschnitt in einer Ausgestaltung des Hülsenelements gemäß Figur 1 mit einer Einrichtung zur Strömungsbeeinflussung;
- Figur 4: zeigt im Querschnitt eine Ausgestaltung mit Wärmerohr oder Vaporchamber;
- Figur 5: zeigt im Querschnitt eine Ausgestaltung mit einem Invertergehäuse aus Gussmaterial;
- Figur 6: zeigt im Querschnitt eine Ausgestaltung mit mehreren zu kühlenden Leiterplatten;
- Figur 7: zeigt, in einem teilweisen Querschnitt, eine Ausgestaltung mit einem Tiefziehgehäuse und ohne abtriebsseitig geteilten Lagerschild;
- Figur 8: zeigt im Längsschnitt eine Ausgestaltung mit Versteifungen oder Wärmeleitrippen innerhalb des Hülsenelements;
- Figur 9: zeigt im Längsschnitt eine Ausgestaltung mit einem tiefgezogenen Modulgehäuse;
- Figur 10: zeigt im Längsschnitt eine Ausgestaltung mit separatem Aufnahmeelement für die Leistungselektronik und separater Kühlplatte;
- Figur 11: zeigt im Querschnitt eine Ausgestaltung mit gegenüber dem Aufnahmeelement verdrehtem Hülsenelement;
- Figur 12: zeigt im Querschnitt eine Variante der Ausgestaltung gemäß Figur 11;
- Figur 13: zeigt im Längsschnitt eine Ausgestaltung mit durchgehend gewelltem Hülsenelement und eingelegten Wärmerohren;
- Figur 14: zeigt die Ausgestaltung aus Figur 13 im Querschnitt; und
- Figur 15: zeigt eine zu Figur 13 alternative Ausgestaltung im Querschnitt.

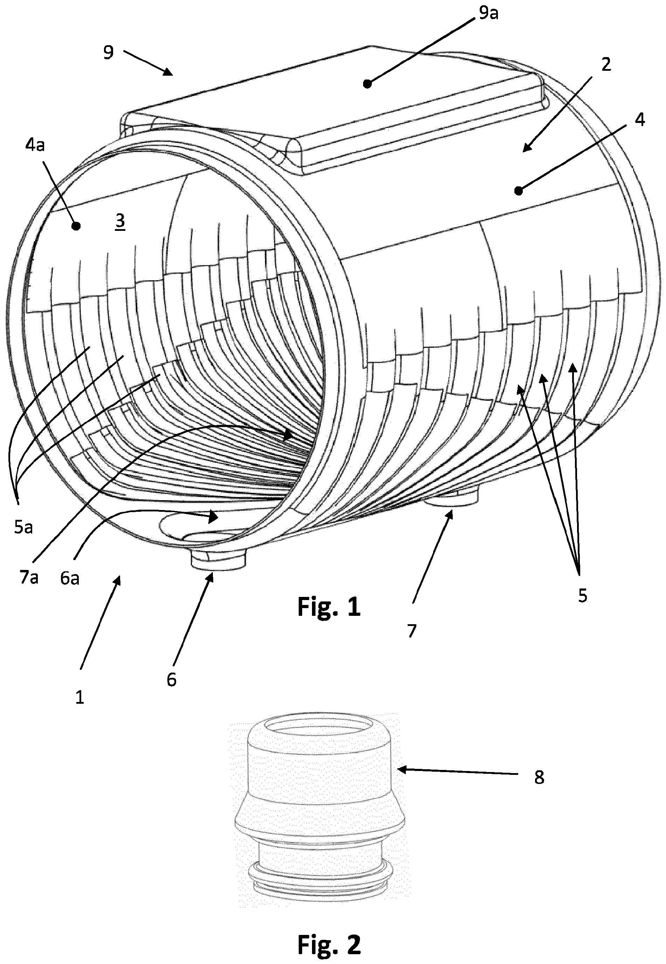

Figur 1 zeigt in einer dreidimensionalen, perspektivischen Darstellung eine Temperiervorrichtung für ein Elektromodul, die in ihrer Gesamtheit mit dem Bezugszeichen 1 bezeichnet ist. In Figur 1 ist diese Temperiervorrichtung 1, die sich grundsätzlich sowohl zum Kühlen als auch zum Erwärmen eines Elektromoduls eignet, noch ohne dieses Elektromodul dargestellt. Bevorzugt kommt sie zum Kühlen von Elektromotoren zum Einsatz, die als Antriebseinheiten für Kraftfahrzeuge eingesetzt werden sollen.

Die Temperiervorrichtung 1 umfasst ein Hülsenelement 2, welches einen Innenraum 3 zum Aufnehmen eines Elektromoduls definiert. Das Hülsenelement 2 besitzt eine umfänglich im Wesentlichen, das heißt bis auf Zu- und Ableitungen, auf die weiter unten noch näher eingegangen wird, geschlossene Mantelfläche 4. Diese Mantelfläche 4 ist in einem ersten Teilbereich gewellt ausgebildet. Einige der Wellen sind in Figur 1 mit dem Bezugszeichen 5 bezeichnet. Die genannten Wellen 5 weisen Wellenberge und Wellentäler auf, wobei die Wellentäler 5a an einer Innenseite 2a des Hülsenelements einen Strömungsraum zum Umströmen eines in dem Hülsenelement 2 aufgenommenen oder aufzunehmenden Elektromoduls mit einem Temperierfluid bilden. Dabei stellen die Wellentäler 5a an der Innenseite 4a des Hülsenelements 4 mit einer Zuleitung 6 und einer Ableitung 7 für das Temperierfluid zu dem Innenraum 3 bzw. aus dem Innenraum 3 in fluidleitender Verbindung.

Im Bereich der Zuleitung 6 und der Ableitung 7 für das Temperierfluid kann die Temperiervorrichtung 1 wie in Figur 2 gezeigt ausgebildet sein und ein entsprechend geformtes Anschlusselement 8 aufweisen, um die Temperiervorrichtung 1 in einfacher Weise mit weiteren Bestandteilen eines Kühlsystems verbinden zu können.

Das in Figur 2 gezeigte Anschlusselement 8 ist speziell als VDA-Anschluss ausgebildet, der an sich bekannt und dem Fachmann geläufig ist. An dieser Stelle ist auf die genaue Ausgestaltung des Anschlusselements 8 nicht weiter einzugehen. Selbstverständlich ist die Erfindung nicht auf das in Figur 2 gezeigte Anschlusselement 8 beschränkt.

Unter Bezugnahme auf Figur 1 weist die Temperiervorrichtung 1 bzw. das Hülsenelement 2 in einem (zweiten) Teilbereich einen ebenen Mantelflächenabschnitt auf, der in Figur 1 mit dem Bezugszeichen 9 bezeichnet ist. Da das Hülsenelement 2 insgesamt nach Art eines geraden Kreiszylinders ausgeführt ist, kann der ebene Mantelflächenabschnitt 9 gemäß Figur 1 insbesondere tangential zu dem kreisförmigen Umfang des Hülsenelements 2 angeordnet sein. Gemäß Figur 1 bildet der ebene Mantelflächenabschnitt 9 eine rechteckige ebene Fläche 9a aus, an der sich in vorteilhafter Weise eine in Figur 1 nicht gezeigte Leiterplatte für eine Leistungselektronik des Elektromoduls wärmeleitend befestigen lässt, um die Kühlwirkung eines durch die Wellentäler 5a strömenden Fluids auch zum Kühlen bzw. Temperieren der Leistungselektronik nutzen zu können.

Zu diesem Zweck ist das Hülsenelement vorzugsweise aus einem gut wärmeleitenden metallischen Material gebildet, insbesondere aus Stahl. Die konkrete Formgebung gemäß Figur 1 kann vorzugsweise zumindest teilweise an einem Innenhochdruck-Umformverfahren realisiert werden.

Wie man der Figur 1 noch entnimmt, können die Zuleitung 6 und die Ableitung 7 für das Temperierfluid in Richtung einer Längsachse des Hülsenelements 2 fluchtend hintereinander angeordnet sein. Die Wellen 5 laufen einerseits im Bereich der Zuleitung 6 und andererseits im Bereich der Ableitung 7 fächerartig auseinander bzw. zusammen, während sie sich ansonsten im Wesentlichen in Umfangsrichtung erstrecken. Im Bereich des ebenen Mantelflächenabschnitts 9 und auch in Umfangsrichtung seitlich hiervon ist das Hülsenelement 2 glattwandig, das heißt ohne Wellen 5 ausgebildet. Entsprechend weist das Hülsenelement 2 gemäß Figur 1 einen ersten gewellten Teilbereich auf, indem sich die Wellen 5 im Wesentlichen in einer Umfangsrichtung des Hülsenelements 2 erstrecken, und einen weiteren gewellten (dritten) Teilbereich, in dem sich Wellen 5 ebenfalls im Wesentlichen in einer Umfangsrichtung des Hülsenelements 2 erstrecken. Ein zweiter Teilbereich, in dem der ebene Mantelflächenabschnitt 9 angeordnet ist, liegt bei einer solchen Betrachtungsweise in Umfangsrichtung gerade zwischen den beiden genannten, gewellten (ersten und dritten) Teilbereichen. Im Bereich der Zuleitung 6 ist, wie bereits erwähnt, ein Verteilbereich 6a angeordnet, der einen fluidleitenden Übergang zwischen der Zuleitung 6 und den "angeschlossenen" Wellentälern 5a bildet. Entsprechend ist im Bereich der Ableitung 7 ein in Figur 1 nur andeutungsweise erkennbarer Sammelbereich 7a angeordnet, der einen Übergang zwischen den Wellentälern 5a und der Ableitung 7 schafft.

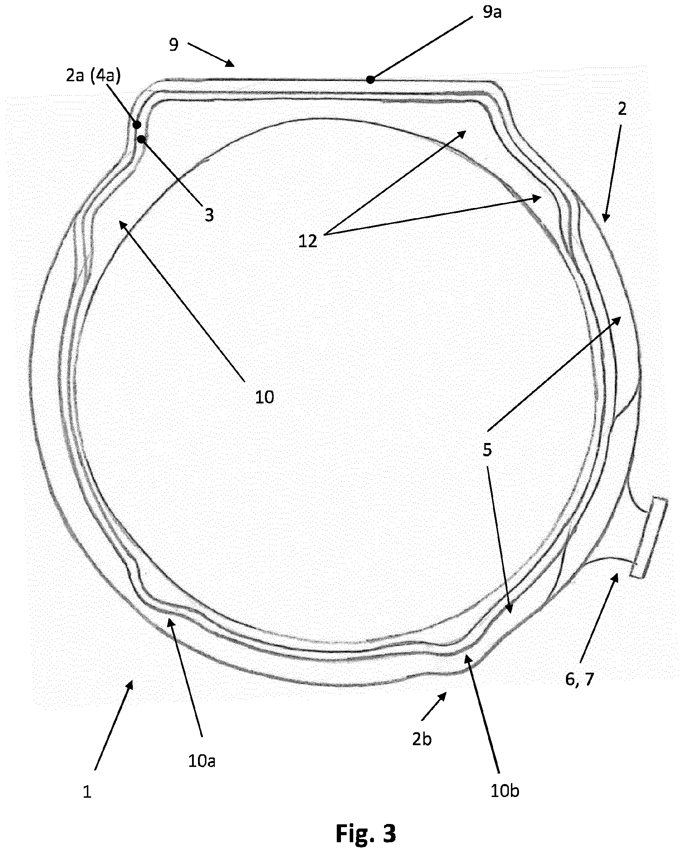

In Figur 3 ist im Querschnitt eine Ausgestaltung gezeigt, bei der zusätzlich zu dem Hülsenelement 2 die Temperiervorrichtung 1 noch ein im Inneren des Hülsenelements 2 angeordnetes Strangpressprofil 10 angeordnet ist, bei dem es sich insbesondere um das Modulgehäuse eines nicht weiter dargestellten Elektromoduls handeln kann. Des Weiteren ist in Figur 3 gezeigt, dass an einer Innenseite 2a bzw. 4a des Hülsenelements 2 Strömungsbeeinflussungselemente (z.B. bei Bezugszeichen 12) für das Temperierfluid vorgesehen sein können. Dieses Temperierfluid strömt gemäß Figur 3 in einem Zwischenraum (nur bei Bezugszeichen 3 erkennbar) zwischen Strangpressprofil 10 und Hülsenelement 2. Wie Figur 3 zu entnehmen ist, weist das Strangpressprofil 10 bei Bezugszeichen 10a und 10b sowie bei Bezugszeichen 12 Erhebungen auf, die als Strömungsbeeinflussungselemente fungieren. Im Bereich der Erhebung 10a weist das Hülsenelement 2 keine entsprechende Erhebung auf, sodass hier ein Strömungskanal für das Temperierfluid eine Verengung aufweist, was mit einer Beeinflussung der Strömung des Temperierfluids einhergeht. Dagegen weist im Bereich der Erhebung 10b das Hülsenelement 2 eine entsprechende Erhebung 2b auf, sodass hier im Wesentlichen keine Strömungsbeeinflussung stattfindet. Mit den Erhebungen bei 12 und bei 10a, b können sog. Lagerschilde (siehe weiter unten) axial verschraubt werden, da im Bereich dieser Erhebungen genug Werkstoff "vorhanden ist", um beispielweise ein Gewinde oder dgl. ausbilden zu können. Die Erhebungen können sich auf der Außenkontur der Vorrichtung 1 abzeichnen (bei 10b) oder von den Wellen aufgenommen werden (bei 10a).

Die Lage und Ausgestaltung der beschriebenen Strömungsbeeinflussungselemente ist keinesfalls auf die in Figur 3 gezeigte Ausgestaltung beschränkt. Insbesondere können in einem Übergangsbereich (bei Bezugszeichen 12) zwischen den gewellten Teilbereichen des Hülsenelements 2 und dem ebenen Mantelflächenabschnitt 9 an der Innenseite 2a des Hülsenelements 2 weitere Strömungsbeeinflussungselemente für das Temperierfluid vorgesehen sein, um insbesondere in diesem Bereich eine Wirbelbildung oder dergleichen zu verhindern bzw. zu begünstigen - je nach Anwendungsfall.

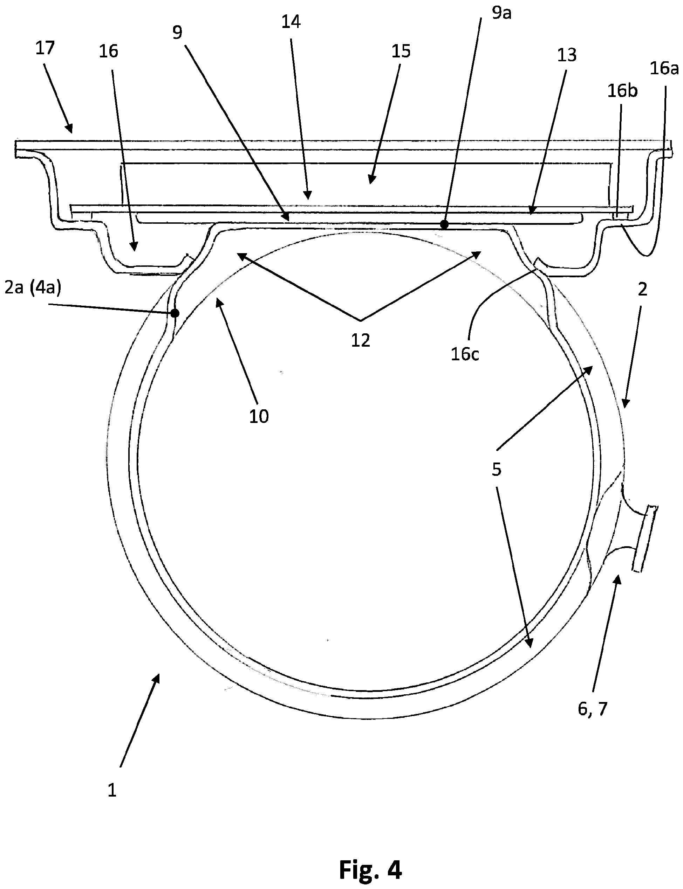

In Figur 4 ist zunächst eine mit Figur 3 vergleichbare Ausgestaltung, jedoch ohne Strömungsbeeinflussungselemente, gezeigt.

Auf dem Bereich der ebenen Fläche 9a in dem ebenen Mantelflächenabschnitt 9 ist ein Wärmeüberträgerelement 13 angeordnet. Bei diesem Wärmeüberträgerelement 13 kann es sich insbesondere um ein Wärmerohr oder eine Vaporchamber handeln, ohne dass die Erfindung auf eine diese besonderen Ausgestaltungen beschränkt wäre. Alternativ kommt auch die Verwendung einer Wärmeleitpaste als Wärmeüberträger in Betracht. Das Wärmeüberträgerelement 13 schafft eine wärmeleitende Verbindung zwischen dem Hülsenelement 2 und einer Leiterplatte 14, auf welcher Leiterplatte 14 die zu kühlende (Leistungs-)Elektronik 15 angeordnet ist, die in Figur 4 nur rein schematisch dargestellt ist. Elektronik 15, Leiterplatte 14 und Wärmeüberträgerelement 13 sind innerhalb eines vorzugsweise als Strangpressprofil oder Tiefziehteil ausgebildeten Gehäuses oder Gehäusebauteils 16 angeordnet. Diese Gehäuse 16 ist nach oben bzw. nach außen grundsätzlich offen, gemäß Figur 4 in diesem Bereich jedoch mit einem Deckelteil 17 (öffenbar) verschlossen, um insbesondere Wartungsarbeiten an der Elektronik 15 durchführen zu können. Vorzugsweise erfolgt die Verbindung zwischen Deckelteil 17 und Gehäuse 16 mittels Verschraubung (nicht gezeigt). Das Gehäuse 16 weist bei Bezugszeichen 16a auf beiden Seiten bzw. umlaufend eine Schulter auf, in deren Bereich bei Bezugszeichen 16b Befestigungsbuchsen für die Leiterplatte 14 vorgesehen sind. Über diese Befestigungsbuchsen 16b kann eine Verschraubung von Leiterplatte 14 und Gehäuse 16 erfolgen. Die Befestigungsbuchsen 16b können stoffschlüssig an dem Gehäuse 16 angebracht sein. Mit seinem unteren Rand 16c stützt sich das Gehäuse 16 außen an dem Hülsenelement 2 ab, insbesondere in den weiter oben beschriebenen Übergangsbereichen 12. Hierdurch kann eine Versteifung bzw. Stabilisierung des Hülsenelements 2, welches aus relativ dünnem Blech gefertigt sein kann, erreicht werden. Vorzugsweise ist das Gehäuse 16 bei Bezugszeichen 16b mit dem Hülsenelement 2 stoffschlüssig miteinander verbunden.

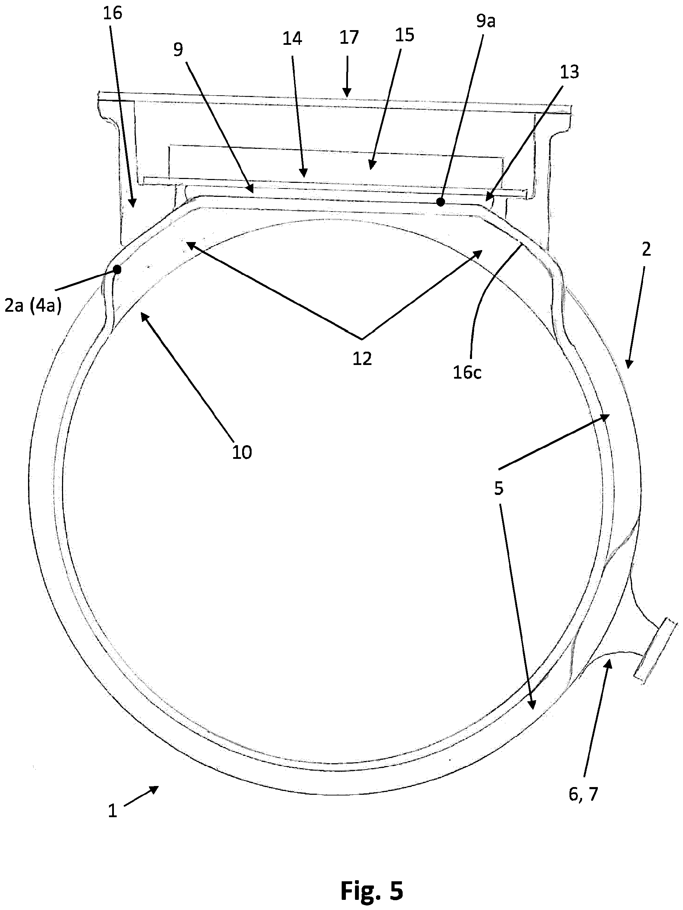

In Figur 5 ist eine der Figur 4 im Wesentlichen entsprechende Ausgestaltung dargestellt, bei der jedoch das Gehäuse 16 in Form eines Gussteils ausgebildet ist. Dies sorgt entsprechend ebenfalls für eine Versteifung des Hülsenelements 2 im Kontaktbereich, wo es vorzugsweise stoffschlüssig angebunden ist. Aufgrund der Ausgestaltung des Gehäuses 16 als Gussteil können die Befestigungen von Deckelteil 17 und Leiterplatte 14 einfacher ausgestaltet sein, da beispielsweise eine Verschraubung direkt mit dem Gussmaterial möglich ist, ohne dass zusätzliche Befestigungs- oder Schraubbuchsen angebracht werden müssten.

Das Wärmeüberträgerelement 13 ist bei der Ausgestaltung gemäß Figur 5 vorzugsweise als Wärmeleitpaste ausgeführt.

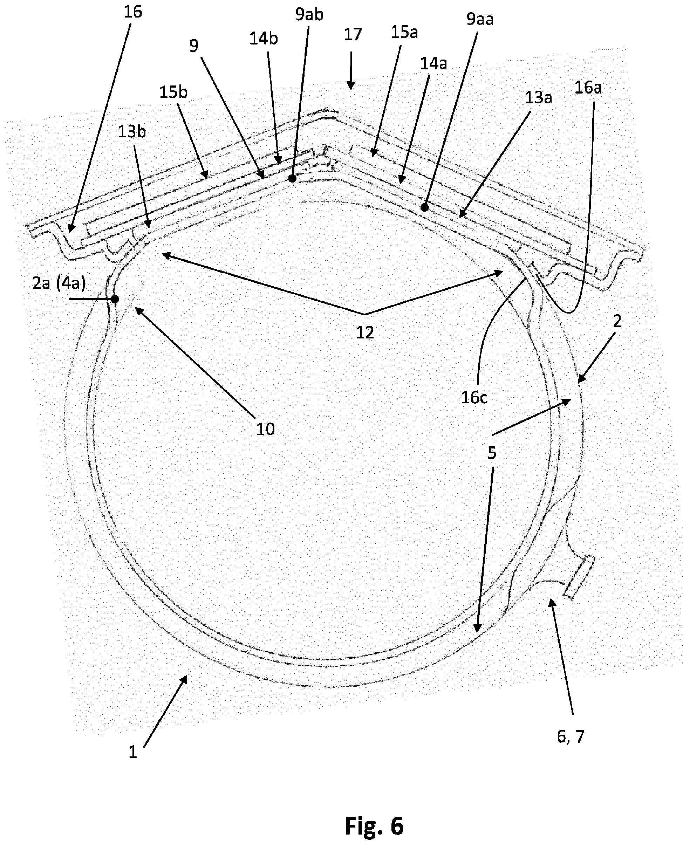

Figur 6 zeigt eine Ausgestaltung vergleichbar Figur 4, bei der die Leiterplatte 14 in Umfangsrichtung in zwei Leiterplatten 14a, 14b unterteilt ist, die jeweils eine zugehörige Elektronik 15a oder 15b tragen und jeweils über ein entsprechendes Wärmeüberträgerelement 13a, 13b an das Hülsenelement 2 angebunden sind. Das Hülsenelement 2 weist entsprechend auch zwei zueinander geneigte, ebene Mantelflächenabschnitte 9aa und 9ab auf, wie gezeigt. Das Deckelteil 17 ist entsprechend abgewinkelt ausgebildet. Die Befestigung der Leiterplatten 14a, 14b am Gehäuse 16 erfolgt bevorzugt stoffschlüssig, beispielsweise durch Verkleben.

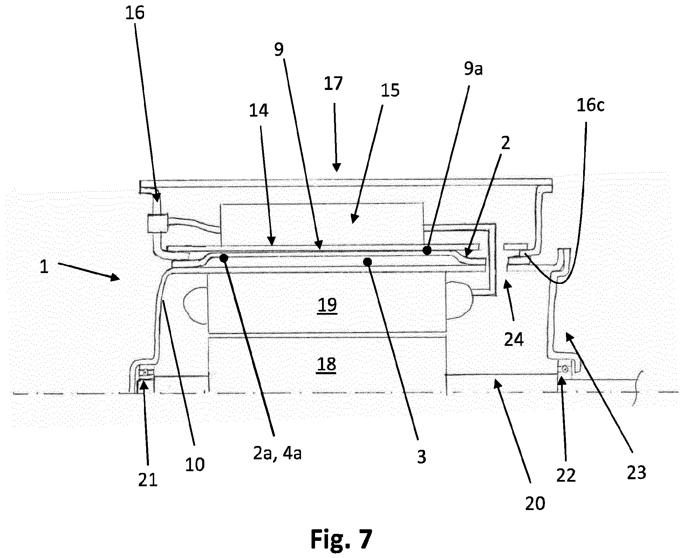

Figur 7 zeigt, in einem teilweisen Längsschnitt, eine Ausgestaltung mit Tiefzieh-Gehäuse 16, das direkt vor und hinter dem ebenen Mantelflächenabschnitt 9a vorzugsweise stoffschlüssig mit dem Hülsenelement 2 verbunden ist. Bei Bezugszeichen 10 ist wiederum das Modulgehäuse eines Elektromoduls dargestellt, und die Verbindung von Tiefzieh-Gehäuse 16 und Hülsenelement 2 erfolgt derart, dass die Kontaktstellen in Bereichen angeordnet sind, in denen das Hülsenelement 2 vollflächig auf dem Modulgehäuse 10 aufliegt. Über diese Bereiche können mechanische Lasten übertragen werden. Die Kontaktbereiche sind hier vorzugsweise zusätzlich stoffschlüssig verbunden, um die genannten Lasten übertragen zu können und die erforderliche Dichtheit herzustellen.

In Figur 7 ist innerhalb des Modulgehäuses 10 noch eine Ausgestaltung des Elektromoduls als Elektromotor mit Rotor 18, Stator 19 und Abtriebswelle 20 dargestellt, die bei Bezugszeichen 21 an dem Modulgehäuse 10 und bei Bezugszeichen 22 an einem sogenannten Lagerschild 23 gelagert ist, welcher Lagerschild 23 das Modulgehäuse 10 stirnseitig verschließt, gleichzeitig aber auch als ein weiteres Deckelteil zum stirnseitigen Verschließen des Hülsenteils 2 fungiert.

Die elektrische Kontaktierung von Stator 19 und Elektronik (Inverter) 15 wird über einen Durchbruch 24 in dem Hülsenelement 2 sowie in dem Modulgehäuse (Statorgehäuse) 10 realisiert. Gemäß der Darstellung in Figur 7 erstreckt sich der Durchbruch 24 auch durch die Leiterplatte 15. Er ist entsprechend abzudichten, was in Figur 7 nicht explizit dargestellt ist.

Der Lagerschild 23 ist vorteilhafterweise ungeteilt (Alternativen siehe weiter unten), wodurch eine entsprechende Bauteilreduktion erreichbar ist.

Für eine verbesserte Montierbarkeit kann zusätzlich zwischen dem Stator 19 und dem Durchbruch 24 für die elektrische Kontaktierung eine Durchmesserveränderung, vorzugsweise eine positive Durchmesserveränderung, vorgesehen sein (nicht dargestellt). Dadurch lässt sich erreichen, dass derjenige Bereich des Statorsitzes innerhalb des Modulgehäuses 10, der eng toleriert sein muss, axial verkleinert werden kann, was mit einer entsprechenden Kostenersparnis einhergeht.

Gut erkennbar ist in Figur 7, dass der zwischen Statorgehäuse bzw. Modulgehäuse 10 und der Innenseite 2a des Hülsenelements 2 definierte Strömungsraum 3 im Bereich des ebenen Mantelflächenabschnitts 9a als ein durchgängiger, zusammenhängender Strömungsraum ausgebildet ist, weil in diesem Bereich keine Wellen des Hülsenelements 2 ausgebildet sind (vgl. Figur 1). Vorzugsweise erstreckt sich der Strömungsraum 3 in axialer Richtung über den gesamten Bereich der zu kühlenden Elektronik 15 einerseits sowie des zu kühlenden Elektromoduls andererseits.

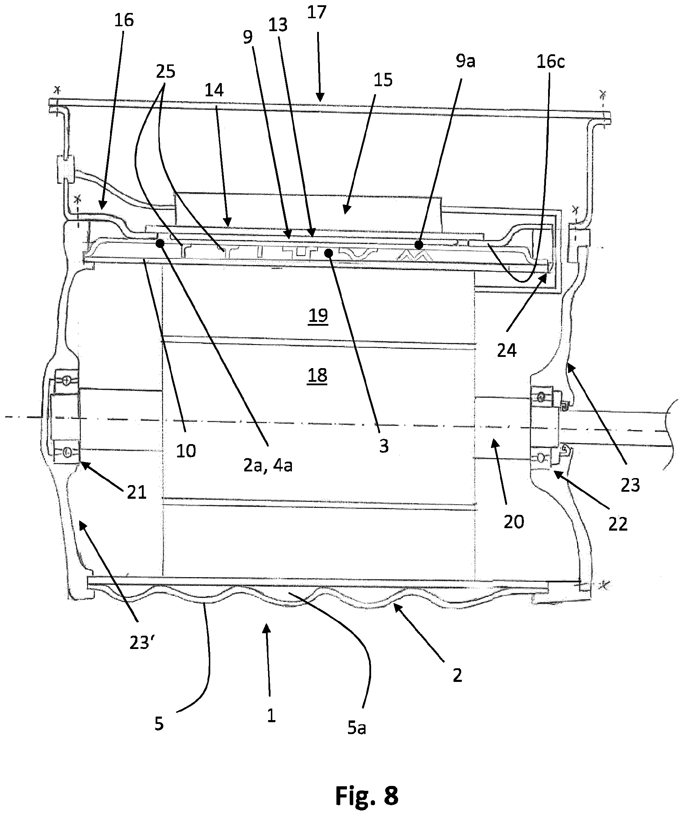

In Figur 8 ist eine weitgehend der Figur 7 entsprechende Ausgestaltung im vollständigen Längsschnitt gezeigt. Die mit x gekennzeichneten Stellen markieren eine Schraubverbindung zwischen Deckelteil 17 und Gehäuse 16 sowie zwischen Gehäuse 16 und Modulgehäuse 10 sowie mit einem ersten Lagerschild 23'. Auch der andere, abtriebsseitige Lagerschild 23 kann entsprechend durch Verschraubung an dem Modulgehäuse 10 befestigt sein, wie dargestellt.

Besonders bevorzugt ist die gemeinsame Einbindung von Modulgehäuse 10 und Hülsenelement 2 stirnseitig im Bereich der Lagerschilde 23 (abtriebsseitig) und 23'.

Bei der Ausgestaltung gemäß Figur 8 ist das Modulgehäuse 10 in Form einer geraden Kreiszylinderhülse ausgebildet, die an beiden Enden, das heißt stirnseitig, mittels eines jeweiligen Lagerschilds 23 bzw. 23' nach Art eines Deckels verschlossen ist. Entsprechend ist die Welle 20 im Gegensatz zur Figur 7 an ihrem einen Ende nicht am Modulgehäuse 10, sondern an dem ersten Lagerschild 23' gelagert, wie gezeigt.

Zwischen dem Modulgehäuse 10 und dem Hülsenelement 2 im Bereich des Strömungsraums 3 sind verschieden ausgeformte Versteifungs- bzw. Wärmeleitrippen dargestellt, um für einen verbesserten Wärmeübergang und für eine mechanische Stabilisierung zu sorgen. Selbstverständlich müssen nicht alle gezeigten Geometrien der Versteifungs-/Wärmeleitrippen 25 bei ein- und derselben Ausführungsform realisiert sein.

Figur 8 zeigt bei Bezugszeichen 23 einen, aufgrund der erforderlichen Montierbarkeit, geteilten Lagerschild, durch dessen äußeres Teilstück die elektrische Verbindung von Inverter (Elektronik 15) zum Stator 19 durch den Durchbruch 24 geführt wird. Diese Anordnung hat den besonderen Vorteil, dass alle Bauteile in nur einer Ebene gefügt werden müssen, was sich günstig in Bezug auf die Tolerierung und maßhaltige Herstellung der Bauteile auswirkt. Es wird gegenüber anderen bekannten Lösungen kein zusätzliches Teil zur Abdichtung von Stromschienen oder dgl. benötigt.

Die bereits erwähnte Figur 7 zeigt in diesem Zusammenhang eine Ausgestaltungsvariante, welche sogar gänzlich ohne zusätzliche Teile (geteilter Lagerschild 23 in Figur 8) auskommt und welche die Durchführung (den Durchbruch) 24 im Bereich des thermischen Pressverbandes bzw. des Kontaktbereichs von Statorträger (Modulgehäuse 10) und Kühlhülse (Hülsenelement 2) aufweist. Die Dichtheit kann exemplarisch durch eine stoffschlüssige Verbindung am Umfang des Durchbruchs 24 gegenüber der Umgebung und ggf. dem Kühlfluidraum (Strömungsraum 3) erreicht werden.

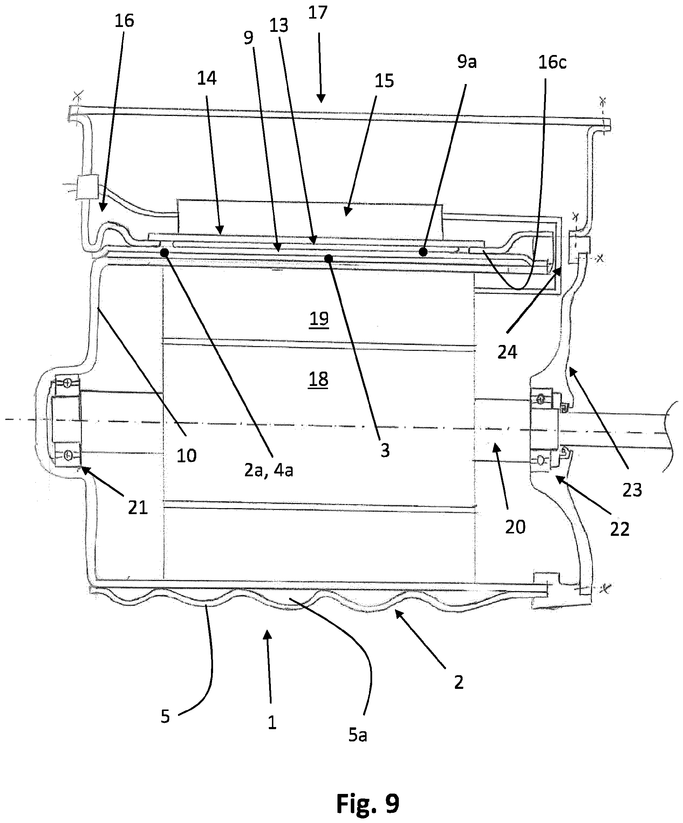

Figur 9 zeigt eine zu Figur 8 ähnliche Ausgestaltung, jedoch mit einem tiefgezogenen Modulgehäuse 10, welches also den Lagerschild 23' gemäß Figur 8 einteilig mit umfasst. Ansonsten ist auf die Ausgestaltung gemäß Figur 9 hier nicht weiter einzugehen, da sie bis auf Details bei der Ausgestaltung und Anbindung des Gehäuses 16 bis auf das Fehlen von Versteifungs-/Wärmeleitrippen 25 (vgl. Figur 8) der Ausgestaltung in Figur 8 im Wesentlichen entspricht. Dieser gegenüber kommt es durch den Wegfall des zweiten Lagerschildes 23' zu einer weiteren Bauteilreduzierung.

Alle bisher vorgestellten Ausführungsformen unterfallen nicht dem vorgeschlagenen Patentanspruch 1. Die dort gezeigten Merkmale können jedoch zusätzlich bei den nachfolgend beschriebenen Ausführungsformen zum Einsatz kommen.

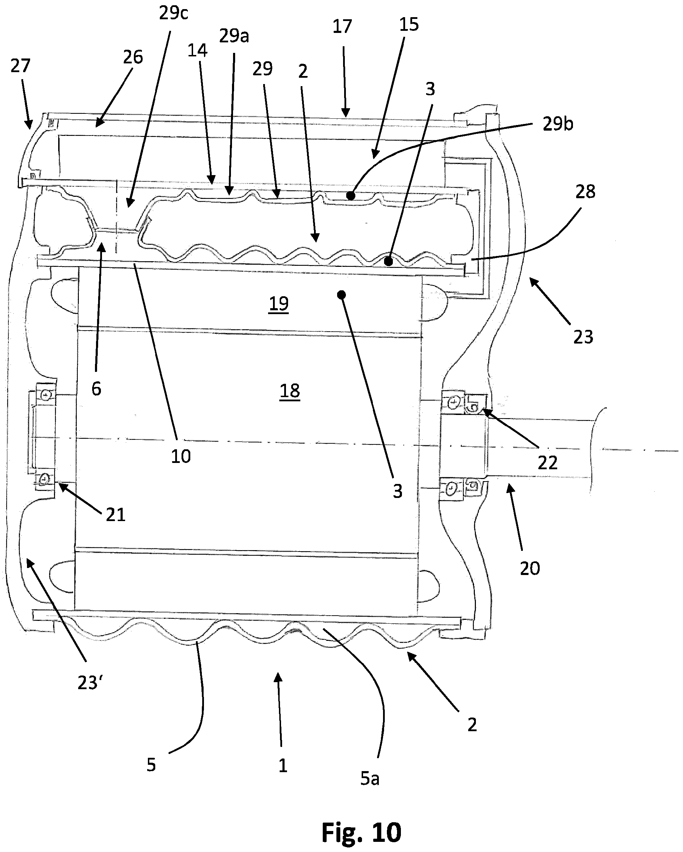

Figur 10 zeigt nun erstmalig eine Ausgestaltung entsprechend Patentanspruch 1, also mit einem zusätzlichen Aufnahmeelement zum Aufnehmen der Elektronik 15. Dieses Aufnahmeelement ist in Figur 10 mit Bezugszeichen 26 bezeichnet. Es umfasst die Randflächen neben der Leiterplatte 14 mit der darauf angeordneten Elektronik 15 mit einem Strangpressprofil 27, welches das Aufnahmeelement 26 auf der einen Seite stirnseitig abschließt. Auf der anderen Seite ist das Aufnahmeelement 26 durch den dementsprechend verlängerten Lagerschild 23 abgeschlossen. Die Leiterplatte 14 stützt sich auf der einen Seite über den Lagerschild 23', auf der anderen Seite über ein zusätzliches Abstützelement 28 an dem Modulgehäuse 10 ab, welches wiederum nach Art einer Kreiszylinderhülse ausgebildet ist.

Wie man Figur 10 entnimmt, weist das Hülsenelement 2 vorliegend keinen abgeflachten Mantelflächenabschnitt auf, sondern ist in Umfangsrichtung im Wesentlichen durchgängig gewellt ausgebildet, wie gezeigt. Im Bereich der Zuleitung 6 ist das Hülsenelement 2 mit einer sogenannten Kühlplatte 29 verbunden, die Bestandteil des Aufnahmeelements 26 ist. Die Kühlplatte 29 ist zumindest in einem Teilbereich ihrer Oberfläche gewellt ausgebildet, wobei Wellentäler 29a an einer Innenseite der Kühlplatte 29 einen Strömungsraum 29b zum Kühlen der in dem Aufnahmeelement 26 aufgenommenen Elektronik 15 (der Leiterplatte 14) mit einem Temperierfluid bilden, wobei im Bereich einer Ableitung 29c eine fluidleitende Verbindung mit dem Innenraum 3 des Hülsenelements 2 besteht. Das Hülsenelement 2 und das Aufnahmeelement 26 bilden also einen zusammenhängenden Kühlkreislauf. Vorzugsweise wird im Betrieb das Temperierfluid zunächst in den Strömungsraum 29b des Aufnahmeelements 26 geleitet, um die Elektronik 15 zu kühlen, von wo es anschließend über die Zuleitung 6 in das Hülsenelement 2 weitergeleitet wird.

Hülsenelement 2 und Kühlplatte 29 sind im Bereich der Zuleitung 6 bzw. Ableitung 29c konisch komplementär ausgebildet, wie in Figur 10 gezeigt, um auf diese Weise Montagetoleranzen auszugleichen und eine hinreichend dichte Verbindung vorzugsweise stoff-schlüssig darstellen zu können.

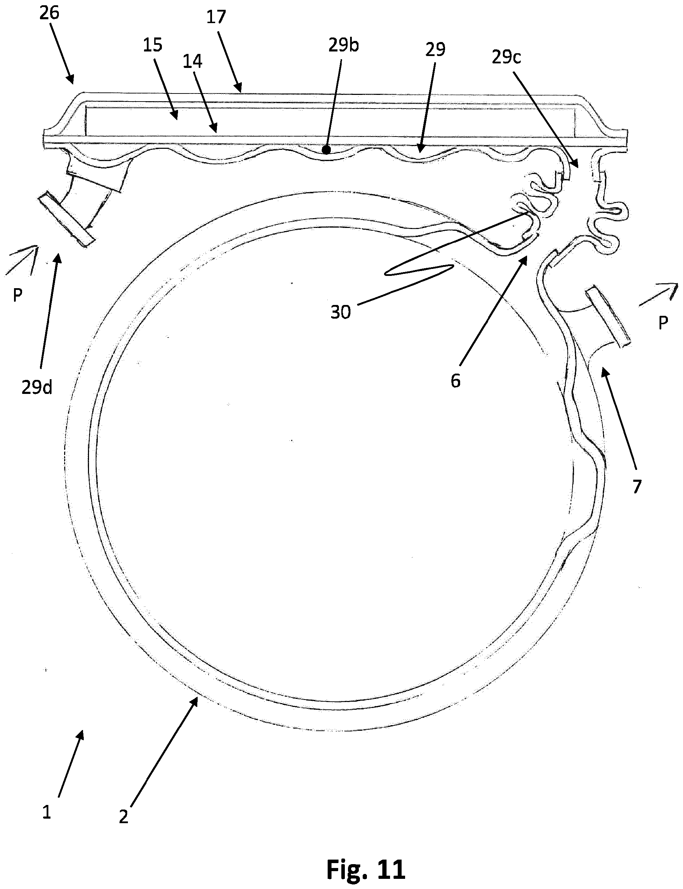

Figur 11 zeigt ebenfalls eine Ausgestaltung mit separatem Aufnahmeelement 26 für die Elektronik 15 nebst Kühlplatte 29.

Wie man der Figur 11 entnimmt, kann das Hülsenelement 2 gegenüber der Kühlplatte 29 verdreht angeordnet sein, um Hülsenelement 2 und Kühlplatte 29 mit einem Toleranzausgleich-Verbindungsmittel 30 verbinden zu können. Das Verbindungsmittel 30 kann als Elastomer-Verbindungselement oder als zumindest teilweise (ring-)gewelltes Schlauchelement realisiert sein, wie dargestellt. Auf diese Weise lässt sich der erforderliche Bauraum verkleinern. Gemäß der Darstellung in Figur 11 ist das Deckelteil 17 des Aufnahmeelements 26 als Tiefziehteil ausgebildet. Die Pfeile P symbolisieren die Strömung des Temperierfluids.

Bezugszeichen 29d zeigt eine Zuleitung für das Temperierfluid zu der Kühlplatte 29 bzw. in den dortigen Strömungsraum 29b.

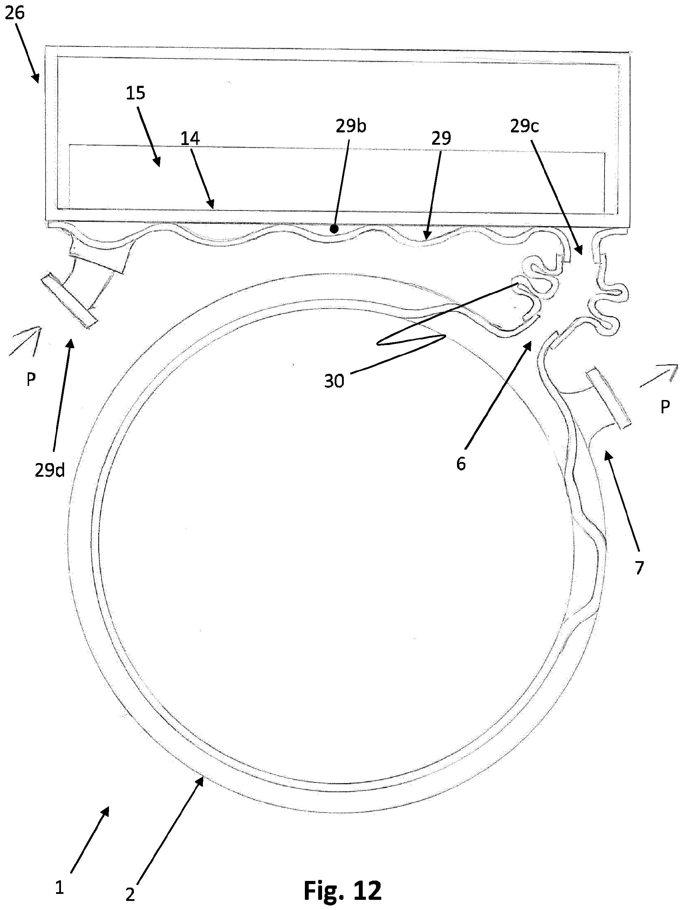

Figur 12 zeigt eine zu der Ausgestaltung in Figur 11 ähnliche Ausgestaltung, bei der das Aufnahmeelement 26 in Form eines Strangpressprofils 30 ausgebildet ist. Ansonsten entspricht die Ausgestaltung derjenigen in Figur 11.

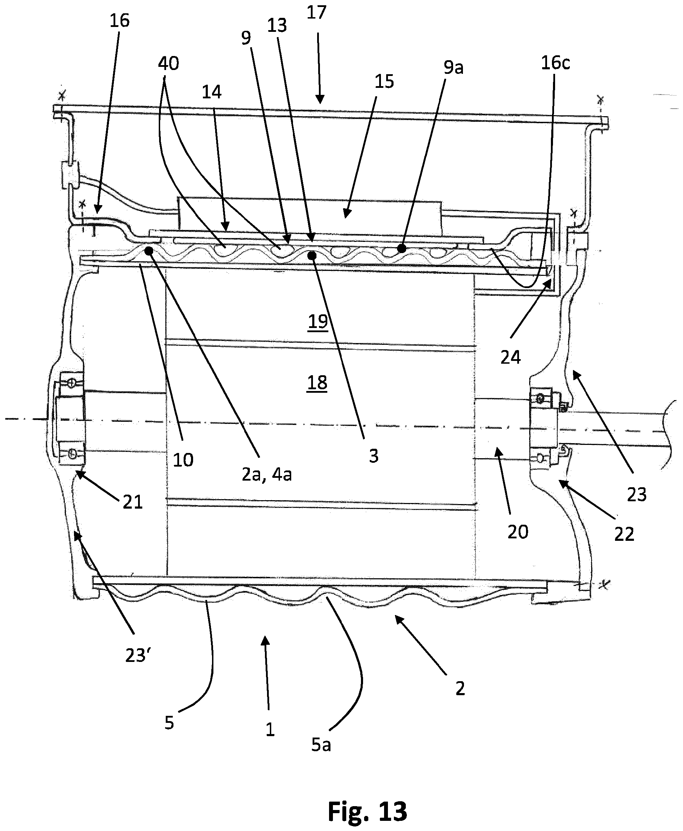

Figur 13 zeigt im Längsschnitt eine weitgehend der Figur 8 entsprechende Darstellung einer weiteren Ausführungsform (gemäß der weiter oben beschriebenen Gestaltungsvariante). Das Hülsenelement 2 ist im Wesentlichen (also bis auf Sammel- oder Verteilbereiche, Zuleitungen, Ableitungen und dgl.) rundumfänglich gewellt ausgebildet. Eine praktisch ebene Befestigungsfläche 9a für die Leiterplatte 14 mit einem dazwischen gelegten Wärmeleitpad 13 oder dgl. entsteht durch Einlegen geometrisch an die Wellen 5a angepasster Wärmerohre 40.

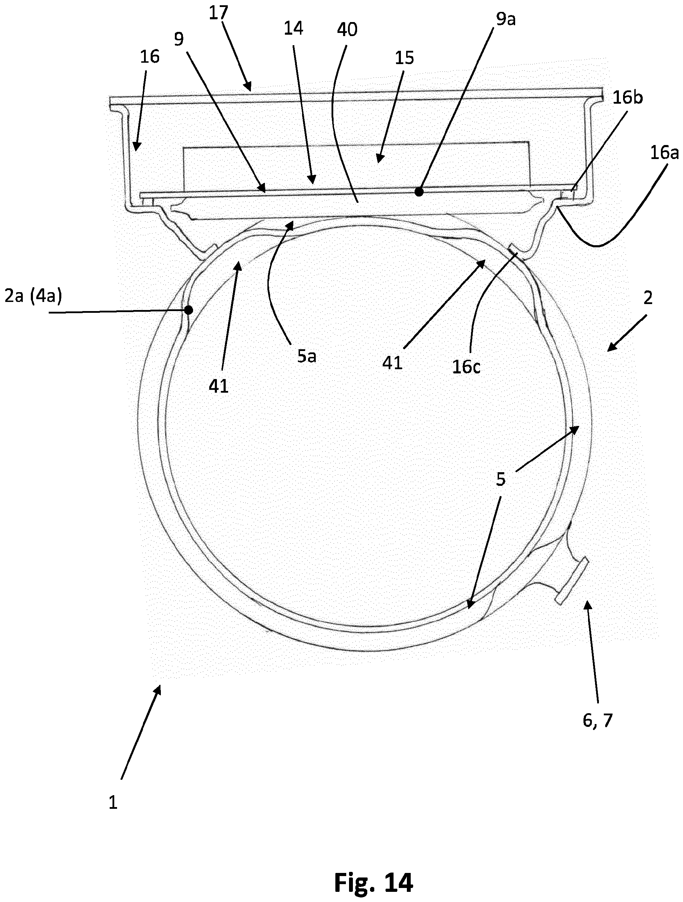

Figur 14 zeigt die Ausgestaltung aus Figur 13 im Querschnitt. Hier ist die Anbindung des (Inverter-)Gehäuses 16 zu erkennen, die bevorzugt stoffschlüssig an zwei ungewellten Bereichen 41 des Hülsenelements 2 erfolgt. Die Wärmeverteilung erfolgt durch die Wärmerohre 40, die sich geradlinig-tangential zu dem Hülsenelement 2 erstrecken.

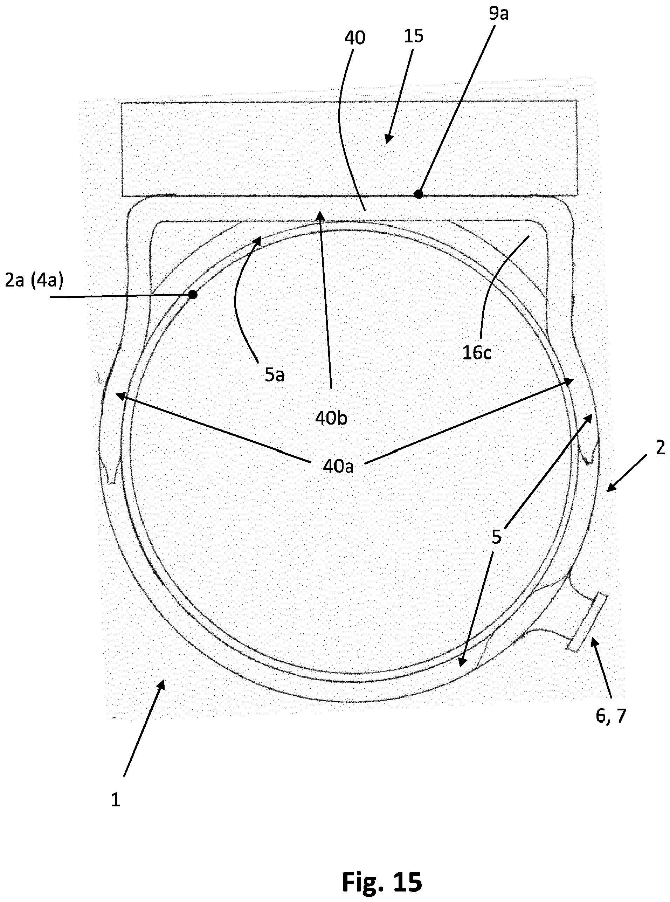

Figur 15 zeigt abschließend im Querschnitt eine Alternative zur Ausgestaltung gemäß Figur 13 und 14. Bei dieser sind U-förmig abgewinkelte Wärmerohre 40 außerhalb des nicht dargestellten (Inverter-)Gehäuses angebracht und im Bereich ihrer freien Schenkel 40a wieder in den Wellen 5a der Kühlhülse (des Hülsenelements 2) konduktiv angebunden. Hierbei folgen die Wärmerohre 40 für eine größere Kontaktfläche im Anbindebereich der Kühlhülsenform folgen. Die Wärmerohre 40 sind beidseitig stoffschlüssig angebunden, vorzugsweise durch Löten. Der mittlere Schenkel 40b der Wärmerohre ist gerade und bildet (über alle Wärmerohre 40) eine angenähert ebene Anbindungsfläche oder Befestigungsfläche 9a für die Elektronik 15. Die Elemente 13 und 14 sind nicht explizit dargestellt, können aber vorhanden sein; ebenso ein Gehäuse 16 mit Deckel 17 (vgl. Figuren 13, 14).

Die U-Form der Wärmerohre 40 gemäß Figur 15 ist nicht zwingend erforderlich. Sie können auch einfach gerade ausgebildet und parallel zueinander sowie tangential an dem Hülsenelement 2 fixiert sein. Auch eine Kombination der Ausgestaltungen gemäß Figur 14 und Figur 15 ist möglich.

## Patentansprüche

1. Temperiervorrichtung (1) für ein Elektromodul, aufweisend:
ein Hülsenelement (2) mit einem Innenraum (3) zum Aufnehmen eines Elektromoduls, welches Hülsenelement (2) eine umfänglich geschlossene Mantelfläche (4) aufweist, welche Mantelfläche (4) in wenigstens einem ersten Teilbereich gewellt oder anderweitig strukturiert ausgebildet ist, wobei Wellentäler (5a) oder Strukturen an einer Innenseite des Hülsenelements (2) einen Strömungsraum (3) zum Umströmen eines in dem Hülsenelement (2) aufgenommenen Elektromoduls mit einem Temperierfluid bilden, indem die Wellentäler (5a) oder Strukturen in diesem ersten Teilbereich an der Innenseite des Hülsenelements (2) mit wenigstens einer Zuleitung (6) für das Temperierfluid zu dem Innenraum (3) und mit einer Ableitung (7) für das Temperierfluid aus dem Innenraum (3) in fluidleitender Verbindung stehen,
**dadurch gekennzeichnet, dass**
zusätzlich zu den Hülsenelement (2) ein Aufnahmeelement (26) zum Aufnehmen einer Leistungselektronik (15) des Elektromoduls vorgesehen ist, welches Aufnahmeelement (26) wenigstens einem ersten Teilbereich seiner Oberfläche gewellt oder anderweitig strukturiert ausgebildet ist, wobei Wellentäler (29a) oder Strukturen an einer Innenseite des Aufnahmeelements (26) einen Strömungsraum (29b) zum Kühlen einer in dem Aufnahmeelement (26) aufgenommenen Leistungselektronik (15) mit einem Temperierfluid bilden, indem die Wellentäler (29b) oder Strukturen an der Innenseite des Aufnahmeelements (26) mit wenigstens einer Zuleitung (29d) für das Temperierfluid zu dem Strömungsraum (29b) und mit einer Ableitung (29c) für das Temperierfluid aus dem Strömungsraum (29b) in fluidleitender Verbindung stehen, wobei der Strömungsraum (29b) mit dem Innenraum (3) in fluidleitender Verbindung steht.

2. Temperiervorrichtung (1) nach Anspruch 1, mit wenigstens einem Lagerschild (23, 23') zum fluiddichten, stirnseitigen Verschließen des Hülsenelements (2).

3. Temperiervorrichtung (1) nach Anspruch 2, bei der der Lagerschild (23) einen Teil des Aufnahmeelements (26) bildet.

4. Temperiervorrichtung (1) nach Anspruch 2 oder 3, bei der der gewellte, erste Teilabschnitt des Aufnahmeelements (26) als von dem Lagerschild (23) separates Bauteil ausgebildet und an dem Lagerschild (23) befestigt ist.

5. Temperiervorrichtung (1) nach einem der Ansprüche 1 bis 4, bei der das Aufnahmeelement (26) mit dem Hülsenelement (2) über eine flexible Leitungsverbindung (30) für das Temperierfluid verbunden ist.

6. Temperiervorrichtung (1) nach einem der Ansprüche 1 bis 5, bei der das Hülsenelement (2) in wenigstens einem zweiten Teilbereich einen ebenen Mantelflächenabschnitt (9) aufweist, welcher Mantelflächenabschnitt (9) zum wärmeleitenden Befestigen einer Leiterplatte (14) für eine Leistungselektronik (15) des Elektromoduls ausgebildet und bestimmt ist.

7. Temperiervorrichtung (1) nach Anspruch 6, bei der das Hülsenelement (2) einen ersten, gewellten oder strukturierten Teilbereich aufweist, in dem sich die Wellen (5) im Wesentlichen in einer Umfangsrichtung des Hülsenelements (2) erstrecken, und einen dritten, gewellten oder strukturierten Teilbereich, in dem sich die Wellen (5) ebenfalls im Wesentlichen in einer Umfangsrichtung des Hülsenelements (2) erstrecken, wobei der zweite Teilbereich in Umfangsrichtung zwischen dem ersten und dem dritten Teilbereich angeordnet ist.

8. Temperiervorrichtung (1) nach Anspruch 7, bei der zwischen der Zuleitung (6) und dem ersten Teilbereich ein Verteilbereich (6a) angeordnet ist, der einen fluidleitenden Übergang zwischen der Zuleitung (6) und den Wellentälern (5a) in dem ersten Teilbereich bildet.

9. Temperiervorrichtung (1) nach Anspruch 7 oder 8, bei der zwischen dem dritten Teilbereich und der Ableitung (7) ein Sammelbereich (7a) angeordnet ist, der einen fluidleitenden Übergang zwischen der Ableitung (7) und den Wellentälern (5a) in dem dritten Teilbereich bildet.

10. Temperiervorrichtung (1) nach einem der Ansprüche 6 bis 9, bei der der ebene Mantelflächenabschnitt (9) durch zumindest teilweise in Wellentäler (5a) des Hülsenelements (2) eingebrachte Wärmerohre (40) gebildet ist.

11. Temperiervorrichtung (1) nach einem der Ansprüche 6 bis 10, bei der in einem Übergangsbereich zwischen dem ersten, gewellten Teilbereich und dem ebenen Mantelflächenabschnitt (9) an einer Innenseite (2a) des Hülsenelements (2) wenigstens ein Strömungsbeeinflussungselement für das Temperierfluid vorgesehen ist.

12. Temperiervorrichtung (1) nach einem der Ansprüche 6 bis 11, bei der das Hülsenelement (2) nach Art eines geraden Kreiszylinders ausgebildet ist, wobei ein lichter Durchmesser im Bereich des ebenen Mantelflächenabschnitts (9) kleiner ist als in dem restlichen Strömungsraum (3).

13. Temperiervorrichtung (1) nach einem der Ansprüche 1 bis 12, mit wenigstens einem weiteren Gehäusebauteil (16) zum Aufnehmen einer Leistungselektronik (15) des Elektromoduls, welches Gehäusebauteil (16) zumindest den ebenen Mantelflächenabschnitt (9) überdeckt.

14. Temperiervorrichtung (1) nach Anspruch 13, bei der das Gehäusebauteil (16) außen an dem Hülsenelement (2) befestigt ist, vorzugsweise stoff-schlüssig.

15. Elektromodul mit einer Leistungselektronik (15) zum Betreiben des Elektromoduls und mit einer Temperiervorrichtung (1), bei dem Temperiervorrichtung (1) nach einem der Ansprüche 1 bis 5 ausgebildet und die Leistungselektronik gemäß in dem Aufnahmeelement (26) angeordnet ist, wobei der gewellte Teilbereich der Oberfläche des Aufnahmeelements (26) mit einer Leiterplatte (14) für die Leistungselektronik (15) des Elektromoduls in wärmeleitender Verbindung steht.

16. Elektromodul nach Anspruch 15, bei dem die Leistungselektronik in einem separaten Gehäuseteil für die Leistungselektronik angeordnet ist, wobei der Mantelflächenabschnitt (9) mit einer Leiterplatte (14) für die Leistungselektronik (15) des Elektromoduls in wärmeleitender Verbindung steht.

17. Elektromodul nach Anspruch 15 oder 16, bei dem das Elektromodul ein Modulgehäuse (10) aufweist, welches Modulgehäuse (10) in dem Hülsenelement (2) aufgenommen ist, wobei die Leistungselektronik (15) außerhalb des Modulgehäuses (10) und außerhalb des Hülsenelements (2) angeordnet ist.

18. Elektromodul nach einem der Ansprüche 15 bis 17, bei dem die Leistungselektronik auf einer Mehrzahl von Leiterplatten (14a, 14b) angeordnet ist, die vorzugsweise jeweils tangential zu dem Hülsenelement (2) an diesem angeordnet sind, höchst vorzugsweise an einer entsprechenden Mehrzahl an ebenen Mantelflächenabschnitten (9aa, 9ab).

19. Elektromodul nach einem der Ansprüche 15 bis 18, unter Rückbezug auf Anspruch 17, bei dem eine elektrische Verbindung zwischen der Leistungselektronik (15) und einem in dem Modulgehäuse (10) aufgenommenen Bestandteil, insbesondere dem Stator (19) eines Elektromotors, über einen Durchbruch (24) realisiert ist, welcher Durchbruch (24) unmittelbar zwischen einem die Leistungselektronik (15) aufnehmendem Gehäuse (16) und dem Modulgehäuse (10) oder einem das Modulgehäuse (10) nach außen verschließenden Lagerschild (23) angeordnet ist.
